# EUROPEAN PATENT APPLICATION

(11) **EP 4 787 181 A1**
(43) Date of publication of application: **05.08.2026**
(21) Application number: 24869720.3
(22) Date of filing: 09.05.2024
(51) Int. Cl.: G06F 16/22, G06F 16/2455

(54) **DATA PROCESSING METHOD AND RELATED DEVICE**

(30) Priority: 28.09.2023 CN 202311287944; 26.12.2023 CN 202311824307
(71) Applicant: Huawei Cloud Computing Technologies Co., Ltd., Gui'an New District, Guizhou 550025 (CN)
(72) Inventor: LV, Jinquan, Guiyang, Guizhou 550025 (CN); ZHONG, Yanhui, Guiyang, Guizhou 550025 (CN); ZENG, Kai, Guiyang, Guizhou 550025 (CN); WANG, Chuanting, Guiyang, Guizhou 550025 (CN)
(74) Representative: Isarpatent
(86) International application number: PCT/CN2024/091987
(87) International publication number: WO 2025/066152

(57) **Abstract**

A data processing method is provided, to reduce occupation of storage resources and save storage resources. The method is applied to a network device, and includes: obtaining a base table and M aggregate tables, where the base table includes data actually stored by the network device, the M aggregate tables are obtained by processing, based on M aggregation definitions, the data included in the base table, the aggregation definitions corresponding to the M aggregate tables are different, and each aggregation definition includes a key-value pair and indicates a manner of processing the data included in the base table (301); determining N to-be-merged aggregate tables from the M aggregate tables based on keys included in the M aggregation definitions (302); and merging the N to-be-merged aggregate tables to obtain a merged aggregate table, where a data amount of the merged aggregate table is less than a sum of data amounts of the N to-be-merged aggregate tables (303). Both M and N are integers greater than or equal to 2, and N is less than or equal to M.

## Description

This application claims priorities to Chinese Patent Application No. 202311287944.7, filed with the China National Intellectual Property Administration on September 28, 2023 and entitled "DATA AGGREGATION METHOD, APPARATUS, AND COMPUTE DEVICE CLUSTER", and to Chinese Patent Application No. 202311824307.9, filed with the China National Intellectual Property Administration on December 26, 2023 and entitled "DATA PROCESSING METHOD AND RELATED DEVICE", both of which are incorporated herein by reference in their entireties.

### TECHNICAL FIELD

This application relates to the computer field, and in particular, to a data processing method and a related device.

### BACKGROUND

In data management, data from a base table can be aggregated according to specific rules to create an aggregate table. These rules can be understood as aggregation definitions, which involve key-value (key-value) pairs. The aggregate table can also be understood as a preprocessed version of the base table for further invocation.

In a data processing method, the data in the base table can be aggregated by using different aggregation definitions, to obtain different aggregate tables. However, this can lead to duplicate data across these tables, with the same information stored multiple times, wasting storage resources.

### SUMMARY

This application provides a data processing method and a related device, to reduce occupation of storage resources and save storage resources.

According to a first aspect, this application provides a data processing method, including:
A network device obtains a base table and M aggregate tables, where the base table includes data actually stored by the network device, and the M aggregate tables are obtained by processing, based on M aggregation definitions, the data included in the base table. The M aggregate tables are in one-to-one correspondence with the M aggregation definitions, and the M aggregation definitions are different. This means that the M aggregate tables each include unique data. An aggregation definition includes a key-value (key-value) pair. Two aggregation definitions are considered different if they differ in at least one key or one value. When an aggregation definition includes a plurality of keys or a plurality of values, if any key or any value is different from that in another aggregation definition, the two aggregation definitions are considered different. Conversely, aggregation definitions are identical only when all their keys and values match exactly. The aggregation definition indicates a manner of processing the data of the aggregate table included in the base table to obtain an aggregate table. N to-be-merged aggregate tables are determined from the M aggregate tables based on the keys (keys) included in the M aggregation definitions, and the N to-be-merged aggregate tables are merged to obtain a merged aggregate table. A data amount of the merged aggregate table is less than a sum of data amounts of the N to-be-merged aggregate tables. Both M and N are integers greater than or equal to 2, and N is less than or equal to M. In other words, the to-be-merged aggregate tables may be part of or all of the M aggregate tables. In addition, merging the N to-be-merged aggregate tables may be merging the N aggregate tables into one or more aggregate tables. In other words, there are one or more merged aggregate tables. This is determined by a specific merging operation and details are described below. It should be further noted that the M aggregate tables herein are all aggregate tables corresponding to the base table at a current moment. The M aggregate tables may include an original aggregate table of the base table, that is, an aggregate table obtained by processing the data in the base table for the first time; or may include an aggregate table obtained by aggregating the data in the base table for a plurality of times; or may include aggregate tables obtained using the foregoing two solutions. This is not specifically limited herein.

In this application, after the M aggregate tables corresponding to a same base table are obtained, the N to-be-merged aggregate tables are determined from the M aggregate tables based on the aggregation definitions of the aggregate tables, and the N aggregate tables are merged to obtain the merged aggregate table. The data amount of the merged aggregate table is less than the sum of the data amounts of the N to-be-merged aggregate tables. In other words, the data processing method provided in this application reduces a quantity of times that same data is stored in different aggregate tables, thereby reducing a data amount of the aggregate table and reducing occupation of storage resources.

In some optional implementations of the first aspect, the network device may merge different aggregate tables with a same key included in the aggregation definitions. Specifically, when there are a plurality of first aggregation definitions including a same key in the M aggregation definitions, it is determined that the N to-be-merged aggregate tables include a plurality of first aggregate tables corresponding to the plurality of first aggregation definitions. The same key herein means that all keys included in the aggregation definitions are the same. For example, if keys included in an aggregation definition 1 are A+B, keys included in an aggregation definition 2 are A+B, and keys included in an aggregation definition 3 are A+C, the aggregation definition 1 and the aggregation definition 2 are the plurality of first aggregate tables described herein. In addition, the first aggregate table corresponding to the first aggregation definition herein means that an aggregation definition used by the first aggregate table is the first aggregation definition. When it is determined that the N to-be-merged aggregate tables include the foregoing plurality of first aggregate tables, merging the N to-be-merged aggregate tables is actually merging keys and values corresponding to the plurality of first aggregate tables. Because the keys corresponding to the plurality of first aggregate tables are the same, merging the keys corresponding to the plurality of first aggregate tables is deduplicating the keys, with only one of the duplicate keys retained. In addition, if the values contain duplicate data, the data can be deduplicated. After the plurality of first aggregate tables are merged, a merged aggregate table is obtained. In actual application, there may be a plurality of groups of first aggregate tables, and merging is performed by group. For example, a same key, key 1, corresponds to an aggregate table 1 to an aggregate table 3; and another same key, key 2, correspond to an aggregate table 4 and an aggregate table 5. In this case, the merging process includes merging the aggregate table 1 to the aggregate table 3 to obtain a merged aggregate table, and merging the aggregate table 4 and the aggregate table 5 to obtain another merged aggregate table.

In this application, for the plurality of first aggregate tables with the same key in M aggregate tables, the plurality of first aggregate tables may be directly determined as the to-be-merged aggregate tables. This operation is simple and convenient, and improves practicability of the technical solution of this application. In addition, merging aggregate tables with the same key involves deduplication. This reduces a quantity of stored copies of the same key, further reduces a waste of storage resources, and lowers usage costs of a user.

In some optional implementations of the first aspect, the network device may merge different aggregate tables with different keys included in the aggregation definitions. Specifically, when the M aggregation definitions include X second aggregation definitions with different keys, the network device may determine, in a manner of estimating an aggregation rate of an aggregate table obtained through merging, whether there are aggregate tables that can be merged among the X aggregate tables. In other words, it is determined whether there are N to-be-merged aggregate tables among the X aggregate tables. X is an integer greater than or equal to 2 and less than or equal to M. The network device estimates at least one aggregation rate generated by merging any two to X second aggregate tables among the X second aggregate tables. The generated at least one aggregation rate herein is an estimated aggregation rate corresponding to at least one new aggregate table obtained by merging a plurality of second aggregate tables. If there is a first target aggregation rate that exceeds a first threshold among the at least one aggregation rate, the network device determines that the N to-be-merged aggregate tables include at least one group of second aggregate tables corresponding to the at least one first target aggregation rate. Each of the at least one group of second aggregate tables includes a plurality of second aggregate tables. For example, it is assumed that an estimated aggregation rate of an aggregate table A that is obtained by the network device by merging an aggregate table 1 and an aggregate table 2 with different keys exceeds the first threshold, and an estimated aggregation rate of an aggregate table B that is obtained by the network device by merging the aggregate table 1 and an aggregate table 3 with different keys exceeds the first threshold. In other words, the network device determines that the first target aggregation rate includes the aggregation rate of the aggregate table A and the aggregation rate of the aggregate table B. In this case, the network device may determine a group of second aggregate tables (namely, the aggregate table 1 and the aggregate table 2) corresponding to the aggregation rate of the merged aggregate table A, and a group of second aggregate tables (namely, the aggregate table 1 and the aggregate table 3) corresponding to the aggregation rate of the merged aggregate table B. A value of the first threshold may be set based on an actual application requirement. This is not specifically limited herein. Optionally, a smaller quantity of storage resources (or idle storage resources) of the network device indicates a higher value of the first threshold. Optionally, better computing performance of the network device indicates a lower value of the first threshold.

In this application, an estimated aggregation rate generated by merging different aggregate tables with different keys is compared with the first threshold, to determine whether the aggregate tables with different keys can be merged, to balance computational power resources and usage costs. In a solution in which merging can be performed, if there is a same value in the aggregate tables with different keys, deduplication is performed during the merging, to further reduce occupation of storage resources and save storage resources.

In some optional implementations of the first aspect, the plurality of second aggregate tables included in each group of second aggregate tables are further different from another aggregate table in the X second aggregate tables. The another aggregate table herein is an aggregate table other than the group of second aggregate tables among the X second aggregate tables. In other words, if there is one second aggregate table whose estimated aggregation rates with different aggregate tables all exceed the first threshold, one manner is selected to merge the second aggregate table. For example, it is assumed that an aggregation rate generated by merging the aggregate table 1 and the aggregate table 2 and an aggregation rate generated by merging the aggregate table 1 and the aggregate table 3 both exceed the first threshold. In this case, it is determined that a group of second aggregate tables is "the aggregate table 1 and the aggregate table 2" or "the aggregate table 1 and the aggregate table 3". Correspondingly, one of the following manners is selected for merging: merging the aggregate table 1 and the aggregate table 2, and merging the aggregate table 1 and the aggregate table 3.

In this application, it is limited that the plurality of second aggregate tables included in each group of second aggregate tables are different from the another aggregate table in the X second aggregate tables. In this case, during the merging, for the second aggregate table whose estimated aggregation rates with different aggregate tables all exceed the first threshold, only one manner needs to be selected, and the merging does not need to be performed on all the second aggregate tables. This simplifies a processing procedure, and improves processing efficiency.

In some optional implementations of the first aspect, when there are a plurality of aggregation rates that exceed the first threshold and that correspond to a same second aggregate table among the at least one aggregation rate, the network device may determine the first target aggregation rate in a plurality of manners.

Optionally, the network device determines a highest one of the plurality of aggregation rates as the first target aggregation rate. In other words, if there is one second aggregate table whose estimated aggregation rates with different aggregate tables all exceed the first threshold, and one manner is selected to merge the second aggregate table, the highest one of the estimated aggregation rates of merging the second aggregate table and different aggregate tables is selected as the first target aggregation rate, and the second aggregate table to be merged is determined as the second aggregate table corresponding to the first target aggregation rate. For example, if the estimated aggregation rate A for merging the aggregate table 1 and the aggregate table 2 is the highest in all aggregation rates corresponding to the aggregate table 1, it may be determined that the first target aggregation rate is the aggregation rate A, and the aggregate tables that need to be merged are the aggregate table 1 and the aggregate table 2.

Optionally, the network device determines an aggregation rate corresponding to a largest quantity of second aggregate tables among the plurality of aggregation rates as the first target aggregation rate. In other words, if there is one second aggregate table whose estimated aggregation rates with different aggregate tables all exceed the first threshold, and one manner is selected to merge the second aggregate table, the aggregation rate corresponding to the largest quantity of second aggregate tables among the plurality of aggregation rates is selected as the first target aggregation rate, and the second aggregate table to be merged is determined as the second aggregate table corresponding to the first target aggregation rate. For example, if estimated aggregation rates for merging the aggregate table 1 and the aggregate table 2, the aggregate table 1 and the aggregate table 3, and the aggregate table 1 to the aggregate table 3 all exceed the first threshold, it may be determined that the first target aggregation rate is an aggregation rate corresponding to the aggregate table 1 to the aggregate table 3, and the aggregate tables that need to be merged are the aggregate table 1, the aggregate table 2, and the aggregate table 3.

In this application, when there are a plurality of aggregation rates that exceed the first threshold and that correspond to a same second aggregate table among estimated aggregate tables, the first target aggregation rate corresponding to the N to-be-merged aggregate tables is determined in a plurality of manners. This enriches implementations and application scenarios of the technical solution of this application, and improves flexibility of the technical solution. In a solution of selecting the highest one of the plurality of aggregation rates as the first target aggregation rate, it can be learned that, according to aggregation rate = (quantity of rows in the base table - quantity of rows in the aggregate table)/quantity of rows in the base table, a higher aggregation rate indicates less data in an aggregate table obtained through merging, to further reduce a storage amount and save storage resources. In a solution of selecting the aggregation rate corresponding to the largest quantity of second aggregate tables among the plurality of aggregation rates as the first target aggregation rate, the largest quantity of second aggregate tables are merged, so that a merged aggregate table can include data of more dimensions as much as possible, to reduce a stored data amount, and save storage resources.

In some optional implementations of the first aspect, the N to-be-merged aggregate tables include at least one group of second aggregate tables corresponding to at least one first target aggregation rate. The N to-be-merged aggregate tables are merged, that is, keys and values that correspond to each of the at least one group of second aggregate tables are separately merged. It may be understood that a merged aggregate table may be obtained by merging a group of second aggregate tables. For example, it is assumed that the N to-be-merged aggregate tables include two groups of second aggregate tables: a first group of second aggregate tables including an aggregate table 1 and an aggregate table 2, and a second group of second aggregate tables including an aggregate table 3 to an aggregate table 5. In this case, during merging, keys and values corresponding to the aggregate table 1 and the aggregate table 2 are merged to obtain a merged aggregate table; and the aggregate table 3 to the aggregate table 5 are merged to obtain another merged aggregate table. During merging, a deduplication operation is performed on a same value.

In this application, aggregate tables with a same key may be merged, or aggregate tables with different keys may be merged, to reduce a stored data amount as much as possible. In addition, when aggregate tables with different keys are merged, if there is a same value in different aggregations, the deduplication operation is performed, to reduce a quantity of stored copies of the same value, further reduce a waste of storage resources, and reduce usage costs of a user.

In some optional implementations of the first aspect, after the N to-be-merged aggregate tables are merged, in other words, after the merged aggregate table is obtained, the network device may further determine whether data broadcast needs to be performed. Specifically, the network device obtains respective aggregation rates of all aggregate tables corresponding to the base table. All the aggregate tables corresponding to the base table herein are all aggregate tables corresponding to the base table after the N aggregate tables are merged. In other words, all the aggregate tables include aggregate tables that are not merged among the M aggregate tables and the aggregate table obtained by merging the N aggregate tables. The network device determines, from the respective aggregation rates of all the aggregate tables, a second target aggregation rate that exceeds a second threshold, and broadcasts data included in an aggregate table corresponding to the second target aggregation rate. The second threshold may be set based on an actual application requirement. This is not limited herein.

In this application, data in an aggregate table whose aggregation rate exceeds the second threshold may be broadcast, so that during data query, a user can perform query on any node, and data transmission between nodes is not required, thereby reducing usage of network resources, and improving reliability and convenience of the technical solution. In addition, if query is directly performed on a node with small load, data query efficiency can be improved.

In some optional implementations of the first aspect, the network device parallelly performs aggregation calculation on all the aggregate tables corresponding to the base table. Specifically, an execution plan at an aggregation calculation layer may be changed to multithreaded parallel execution, to implement parallel execution of aggregation calculation for the plurality of aggregate tables when the base table corresponds to the plurality of aggregate tables.

In this application, aggregation calculation is performed parallelly to reduce impact on a data import procedure, thereby reducing a data processing delay.

According to a second aspect, this application provides a data processing apparatus, including:
an obtaining unit, configured to obtain a base table and M aggregate tables, where the base table includes data actually stored by the data processing apparatus, the M aggregate tables are obtained by processing, based on M aggregation definitions, the data included in the base table, the M aggregate tables are in one-to-one correspondence with the M aggregation definitions, the M aggregation definitions are different, the aggregation definition includes a key-value pair, the aggregation definition indicates a manner of processing the data included in the base table, and M is an integer greater than or equal to 2; and
a processing unit, configured to determine N to-be-merged aggregate tables from the M aggregate tables based on keys included in the M aggregation definitions, where N is an integer greater than or equal to 2 and less than or equal to M; and merge the N to-be-merged aggregate tables to obtain a merged aggregate table, where a data amount of the merged aggregate table is less than a sum of data amounts of the N to-be-merged aggregate tables.

The data processing apparatus is configured to implement the method shown in any one of the first aspect or the possible implementations of the first aspect.

According to a third aspect, this application provides a compute device. The compute device includes a processor and a storage. The processor of the compute device is configured to execute instructions stored in the storage, to enable the compute device to implement the method shown in any one of the first aspect or the possible implementations of the first aspect.

According to a fourth aspect, this application provides a compute device cluster, including at least one compute device. Each compute device includes a processor and a storage, and the processor of the at least one compute device is configured to execute instructions stored in the storage of the at least one compute device, to enable the compute device cluster to implement the method disclosed in any one of the first aspect or the possible implementations of the first aspect.

According to a fifth aspect, this application provides a computer program product including instructions. When the instructions are executed on a processor, the method shown in any one of the first aspect or the possible implementations of the first aspect is implemented; or when the instructions are run by a computer device cluster, the computer device cluster is enabled to implement the method disclosed in any one of the first aspect or the possible implementations of the first aspect.

According to a sixth aspect, this application provides a computer-readable storage medium. The computer-readable storage medium stores computer program instructions. When the computer program instructions are run on a processor, the method shown in any one of the first aspect or the possible implementations of the first aspect is implemented; or when the computer program instructions are run by a computer device cluster, the computer device cluster is enabled to implement the method disclosed in any one of the first aspect or the possible implementations of the first aspect.

Beneficial effects shown in any one of the second aspect to the sixth aspect are similar to those in any one of the first aspect or the possible implementations of the first aspect. Details are not described herein again.

### BRIEF DESCRIPTION OF DRAWINGS

FIG. 1 is a diagram of a system architecture according to an embodiment of this application;
FIG. 2 is a diagram of a system architecture according to an embodiment of this application;
FIG. 3 is a schematic flowchart of a data processing method according to an embodiment of this application;
FIG. 4 is a diagram according to an embodiment of this application;
FIG. 5 is another diagram according to an embodiment of this application;
FIG. 6 is another diagram according to an embodiment of this application;
FIG. 7 is another schematic flowchart of a data processing method according to an embodiment of this application;
FIG. 8 is a diagram of a structure of a communication apparatus according to an embodiment of this application;
FIG. 9 is a diagram of another structure of a communication apparatus according to an embodiment of this application;
FIG. 10 is a diagram of a structure of a compute device cluster according to an embodiment of this application; and
FIG. 11 is a diagram of another structure of a compute device cluster according to an embodiment of this application.

### DESCRIPTION OF EMBODIMENTS

Embodiments of this application provide a data processing method, to reduce occupation of storage resources and save storage resources.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants are intended to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

First, proper nouns and related concepts that may be used in embodiments of this application are described.

### 1. CDW

The CDW, also referred to as a cloud data warehouse, is a data storage and management service based on cloud computing technologies, and stores and processes enterprise big data on a cloud platform. Compared with conventional data warehouses, the cloud data warehouse has lower costs, higher scalability, and a faster response speed. It stores data on the cloud, and quickly adjusts storage capacity and compute resources as required based on elasticity and flexibility of cloud computing. A data processing method provided in embodiments of this application may be applied to CDW scenarios.

### 2. Base table, aggregate table, and aggregation rate

The base table is a persistent table in a database and logically represents actually stored data. For a network device that uses the database, the base table contains the data actually stored in the network device.

The aggregate table is obtained by processing the data in the base table according to a specific rule. The idea of the aggregate table is to group data by using predefined aggregation definition and based on a specified aggregation key when data is imported, and then an aggregation value is calculated based on the specified aggregation key, to obtain an aggregation key and an aggregation value. The aggregation key and the aggregation value are written into a single table, that is, the aggregate table. In this way, a data set is compressed. In subsequent query tasks, the aggregate table can be scanned and queried, to improve query performance.

Aggregation rate = (Quantity of rows in the base table - Quantity of rows in the aggregate table)/Quantity of rows in the base table. A higher aggregation rate indicates a smaller amount of data in an aggregated data set and better performance.

### 3. Cloud management platform and infrastructure

The cloud management platform is configured to manage an infrastructure of a cloud vendor. The infrastructure is a plurality of cloud data centers disposed in different regions (regions), where at least one cloud data center is disposed in each region. The cloud management platform may provide an interface related to a cloud computing service, for example, a configuration page (namely, an interface) or an API for a tenant to access a cloud service. The tenant may log in to the cloud management platform by using a pre-registered account and password, and after the login succeeds, the tenant selects and purchases a cloud service provided by a cloud data center in a predetermined region. The cloud service is, for example, an object storage service, a virtual machine service, a container service, or another known cloud service.

### 4. Tenant

The tenant is a top-level object configured to manage a cloud service and/or a cloud resource. The tenant registers a tenant account and sets a tenant password on the cloud management platform through a local client (for example, a browser). The local client remotely logs in to the cloud management platform through the local client by using the tenant account and the set tenant password. The cloud management platform provides a configuration interface or an API for the tenant to configure and use the cloud service. The cloud service is specifically provided by an infrastructure managed by the cloud management platform.

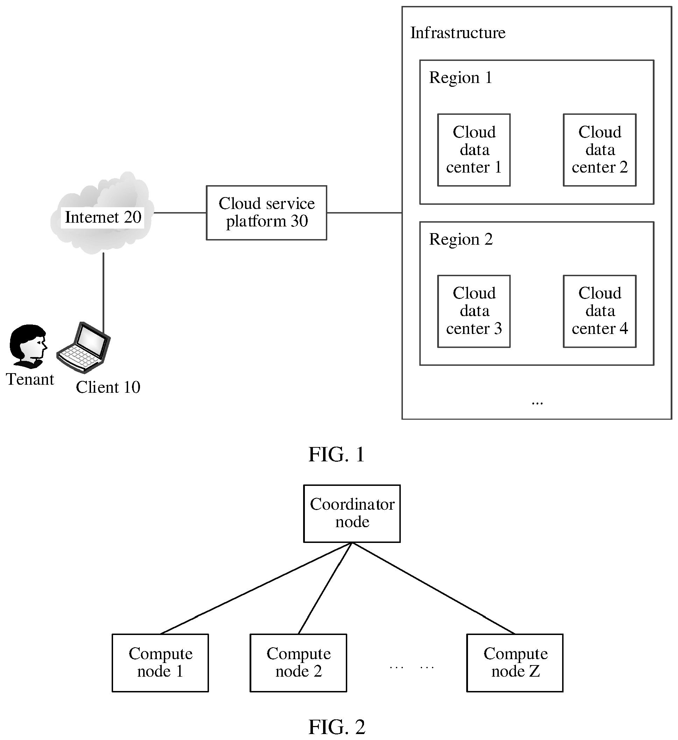

Both FIG. 1 and FIG. 2 are diagrams of system architectures according to embodiments of this application.

As shown in FIG. 1, a tenant logs in to a cloud service platform 30 by using an account and a password that are registered on the cloud service platform 30 via a client 10 and an internet 20. The cloud service platform 30 manages the infrastructure, which includes a plurality of data centers disposed in different regions. For example, a region 1 shown in FIG. 1 includes a cloud data center 1 and a cloud data center 2, and a region 2 includes a cloud data center 3 and a cloud data center 4. A plurality of servers are disposed in each cloud data center, and a service instance (including at least one of a virtual machine, a container, and a dedicated host) runs on the server.

In this embodiment of this application, a data management service is deployed in the service instance, the tenant purchases a cloud service on the cloud service platform 30 via the client, and the tenant sends an invocation request to the cloud service platform 30, where the invocation request is used to request the cloud service from the cloud service platform 30. Specific content of the cloud service includes providing a data management service for the tenant, including data storage, data transmission, and data processing described below.

As shown in FIG. 2, a system includes a coordinator node (coordinator node, CN) and Z compute nodes (data nodes, DNs). Z is an integer greater than 2. The CN is configured to deliver an execution plan and data to the DN, and the DN is configured to perform calculation, data transmission, and the like. A data processing method provided in an embodiment of this application may be applied to the CN, or may be applied to the DN. An application scenario includes interaction between the DN and the CN, or interaction between DNs under a single CN. This is not specifically limited herein.

Product forms of the CN and the DN are not limited in this embodiment of this application. The CN and the DN may be virtual machines, physical machines, or the like on a cloud, or may be used in a non-cloud scenario. This is not specifically limited herein.

It should be noted that, in the embodiment shown in FIG. 2, that the system includes Z+1 nodes is used as an example, and does not constitute a limitation on a quantity of nodes in the system. In actual application, the system may further include more or fewer network devices. This is not specifically limited herein.

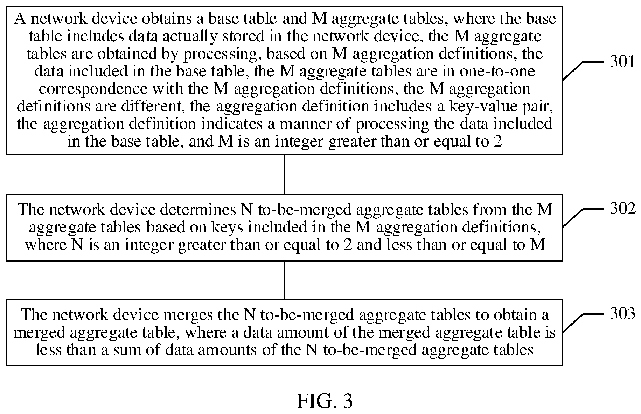

FIG. 3 is a schematic flowchart of a data processing method according to an embodiment of this application. The method includes the following steps.

301: A network device obtains a base table and M aggregate tables, where the base table includes data actually stored in the network device, the M aggregate tables are obtained by processing, based on M aggregation definitions, the data included in the base table, the M aggregate tables are in one-to-one correspondence with the M aggregation definitions, the M aggregation definitions are different, the aggregation definition includes a key-value pair, the aggregation definition indicates a manner of processing the data included in the base table, and M is an integer greater than or equal to 2.

In a data import process, the network device obtains the base table and the M aggregate tables. These aggregate tables are obtained by processing, based on the aggregation definitions, the data included in the base table. The data included in the base table herein may be part of or all of the data of the base table. In other words, a data source of the aggregate table is part of or all of the data in the base table.

The aggregation definition includes a key-value pair, and is used to define a key and a value of the aggregate table. It indicates a manner in which the network device processes the data included in the base table to obtain the aggregate table. Each of the M aggregate tables has one corresponding aggregation definition. In other words, each aggregate table is obtained by processing, based on one aggregation definition, the data included in the base table.

Aggregation definitions corresponding to the M aggregate tables are different. Two aggregation definitions are considered different if they differ in at least one key or one value. When an aggregation definition includes a plurality of keys or a plurality of values, if any key or any value is different from that in another aggregation definition, the two aggregation definitions are considered different. Conversely, aggregation definitions are identical only when all their keys and values match exactly.

For example, it is assumed that the base table is shown in the following Table 1.

**Table 1**

| Subject | Score | Name | Age | ... |
|---|---|---|---|---|
| Mathematics | 100 | Li Si | 12 | ... |
| Chinese | 95 | Zhang San | 12 | ... |
| English | 94 | Wang Wu | 11 | ... |
| Chinese | 93 | Li Si | 12 | ... |
| Mathematics | 91 | Wang Wu | 11 | ... |
| English | 90 | Li Si | 12 | ... |
| English | 88 | Zhang San | 12 | ... |
| Mathematics | 88 | Zhang San | 12 | ... |
| Chinese | 85 | Wang Wu | 11 | ... |

If a key-value pair included in an aggregation definition of an aggregate table 1 is "name-sum (score)", the aggregate table 1 is shown in Table 2 below, where sum (score) indicates a sum of the scores.

**Table 2**

| Name | Sum (score) |
|---|---|
| Li Si | 283 |
| Zhang San | 271 |
| Wang Wu | 270 |

If a key-value pair included in an aggregation definition of an aggregate table 2 is "name-age", the aggregate table 2 is shown in Table 3 below.

**Table 3**

| Name | Age |
|---|---|
| Li Si | 12 |
| Zhang San | 12 |
| Wang Wu | 11 |

As shown in Table 2 and Table 3, the aggregate table groups the data in the base table based on the keys included in the aggregation definitions, thereby realizing data compression. In subsequent data query tasks, the aggregate table can be scanned and queried, and query performance is improved.

It should be noted that the foregoing Table 1 to Table 3 are merely examples of the base table and the aggregate table, and do not constitute a limitation on a representation form of the base table or the aggregate table. In actual application, the base table or the aggregate table may be another representation form, for example, a tree structure or a key-value pair. This is not specifically limited herein.

302: The network device determines N to-be-merged aggregate tables from the M aggregate tables based on keys included in the M aggregation definitions, where N is an integer greater than or equal to 2 and less than or equal to M.

Different aggregation definitions may include a same key or different keys. This means that different aggregate tables may correspond to a same key or different keys. For different cases, the network device has different processing manners, which are separately described in the following.
1. The N to-be-merged aggregate tables include aggregate tables with a same key.

An aggregation definition of each aggregate table includes a key of the aggregate table. When there are a plurality of first aggregation definitions including a same key in the M aggregation definitions, the network device determines that the N to-be-merged aggregate tables include a plurality of first aggregate tables corresponding to the plurality of first aggregation definitions. The first aggregate table corresponding to the first aggregation definition herein means that an aggregation definition used by the first aggregate table is the first aggregation definition.

Because one aggregation definition may include one or more keys, that the plurality of first aggregation definitions include the same key herein means that keys included in different aggregate table definitions are the same. For example, if keys included in an aggregation definition 1 and an aggregation definition 2 are A+B, and keys corresponding to an aggregation definition 3 are A+C, the aggregation definition 1 and the aggregation definition 2 are the plurality of first aggregation definitions described herein. An aggregate table 1 corresponding to the aggregation definition 1 and an aggregate table 2 corresponding to the aggregation definition 2 are the plurality of first aggregate tables described herein.

In some optional implementations, there may be a plurality of groups of first aggregation definitions. In other words, the N to-be-merged aggregate tables include a plurality of groups of first aggregate tables, and keys included in aggregation definitions corresponding to each group of first aggregate tables are the same.

For example, it is assumed that keys included in an aggregation definition 1 to an aggregation definition 3 are the same, and are both A; and keys included in an aggregation definition 4 and an aggregation definition 5 are the same, and are both B. In this case, an aggregate table 1 corresponding to the aggregation definition 1 to an aggregate table 3 corresponding to the aggregation definition 3 are a plurality of first aggregate tables with the same key A, and an aggregate table 4 corresponding to the aggregation definition 4 and an aggregate table 5 corresponding to the aggregation definition 5 are a plurality of first aggregate tables with the same key B.

In this application, the plurality of first aggregate tables with the same key in the M aggregate tables may be directly determined as the to-be-merged aggregate tables. This operation is simple and convenient, and improves practicability of the technical solution of this application.

2. The N to-be-merged aggregate tables include aggregate tables with different keys.

In general, for the aggregate tables with different keys, the network device estimates an aggregation rate generated by merging different aggregate tables, and compares the aggregation rate with a first threshold, to determine whether the different aggregate tables are included in the N to-be-merged aggregate tables.

Specifically, when the M aggregation definitions include X second aggregation definitions with different keys, the network device estimates at least one aggregation rate generated by merging any two to X second aggregate tables among the X second aggregate tables corresponding to the X second aggregation definitions. X is an integer greater than or equal to 2 and less than or equal to M. If there is at least one first target aggregation rate exceeding the first threshold among the at least one aggregation rate, the network device determines that the N to-be-merged aggregate tables include at least one group of second aggregate tables corresponding to the at least one first target aggregation rate, and each of the at least one group of second aggregate tables includes a plurality of second aggregate tables.

It should be noted that the at least one aggregation rate generated by merging any two to X second aggregate tables described above is an estimated aggregation rate corresponding to at least one new aggregate table obtained by merging the plurality of second aggregate tables. For example, assuming that keys corresponding to an aggregate table 1 to an aggregate table 4 are different, the network device estimates an aggregation rate generated by merging any two to four aggregate tables among the four aggregate tables. The resulting aggregation rates for the merged aggregate tables are shown in the following Table 4.

**Table 4**

| Quantity of aggregate tables estimated to be merged | Aggregate tables estimated to be merged | Aggregation rate of a merged aggregate table |
|---|---|---|
| Two aggregate tables are merged | Aggregate tables 1 and 2 | Aggregation rate A |
| | Aggregate tables 1 and 3 | Aggregation rate B |
| | Aggregate tables 1 and 4 | Aggregation rate C |
| | Aggregate tables 2 and 3 | Aggregation rate D |
| | Aggregate tables 2 and 4 | Aggregation rate E |
| | Aggregate tables 3 and 4 | Aggregation rate F |
| Three aggregate tables | Aggregate tables 1, 2, and 3 | Aggregation rate G |
| | Aggregate tables 1, 2, and 4 | Aggregation rate H |
| | Aggregate tables 1, 3, and 4 | Aggregation rate I |
| | Aggregate tables 2, 3, and 4 | Aggregation rate J |
| Four aggregate tables | Aggregate tables 1, 2, 3, and 4 | Aggregation rate K |

As shown in Table 4, the network device estimates that an aggregation rate of a merged aggregate table obtained by merging the aggregate table 1 and the aggregate table 2 is the aggregation rate A.

For example, assuming that in the aggregation rate A to the aggregation rate K shown in Table 4, aggregation rates of the aggregation rate A, the aggregation rate F, and the aggregation rate I all exceed the first threshold, the N to-be-merged aggregate tables determined by the network device include a group of aggregate tables corresponding to the aggregation rate A (the aggregate table 1 and the aggregate table 2), a group of aggregate tables corresponding to the aggregation rate F (the aggregate table 3 and the aggregate table 4), and a group of aggregate tables corresponding to the aggregation rate I (the aggregate table 1, the aggregate table 3, and the aggregate table 4).

In addition, it should be noted that a value of the first threshold may be set based on an actual application requirement. This is not specifically limited herein. Optionally, a smaller quantity of storage resources (or idle storage resources) of the device indicates a higher value of the first threshold. Optionally, better computing performance of the network device indicates a lower value of the first threshold.

In some optional implementations, the network device may store the at least one aggregation rate. When obtaining a new aggregate table corresponding to the base table and when determining whether the aggregate table and a previously obtained aggregate table can be merged, the network device may not repeatedly calculate an aggregate table corresponding to a merging solution that has been estimated, to save compute resources.

For example, it is assumed that the network device obtains an aggregate table 5 based on the example of Table 4, and keys of the aggregate table 5 are different from all keys of the aggregate table 1 and the aggregate table 2. The network device only needs to estimate aggregation rates generated by merging the aggregate table 1 and the aggregate table 5, merging the aggregate table 2 and the aggregate table 2, and merging the aggregate table 1, the aggregate table 2, and the aggregate table 5, and does not need to estimate the aggregation rate generated by merging the aggregate table 1 and the aggregate table 2.

In this application, an estimated aggregation rate generated by merging different aggregate tables with different keys is compared with the first threshold, to determine whether the aggregate tables with different keys can be merged, thereby balancing computational power resources and usage costs. In a solution in which merging can be performed, if there is a same value in the aggregate tables with different keys, deduplication is performed during the merging, to further reduce occupation of storage resources and save storage resources.

In the foregoing solution, a quantity of merging times of each aggregate table is not limited, provided that an aggregation rate of a new aggregate table generated through merging exceeds the first threshold. In other words, a same second aggregate table may be included in different groups of second aggregate tables. The aggregate table 1 shown in Table 4 is included in both the group of aggregate tables corresponding to the aggregation rate A and the group of aggregate tables corresponding to the aggregation rate I.

In some optional implementations, the plurality of second aggregate tables included in each group of second aggregate tables are different from another aggregate table in the X second aggregate tables. The another aggregate table herein is an aggregate table other than the group of second aggregate tables among the X second aggregate tables. In other words, if there is one second aggregate table whose estimated aggregation rates with different aggregate tables all exceed the first threshold, one manner is selected to merge the second aggregate table.

For example, assuming that in the example shown in Table 4, both the aggregation rate A and the aggregation rate I exceed the first threshold, the network device selects, from the group of aggregate tables corresponding to the aggregation rate A and the group of aggregate tables corresponding to the aggregation rate I, a group of second aggregate tables as the to-be-merged aggregate tables. In other words, the network device determines that the N to-be-merged aggregate tables include "the aggregate table 1 and the aggregate table 2", or include "the aggregate table 1, the aggregate table 3, and the aggregate table 4".

In this application, it is limited that the plurality of second aggregate tables included in each group of second aggregate tables are different from the another aggregate table in the X second aggregate tables. In this case, during the merging, for the second aggregate table whose estimated aggregation rates with different aggregate tables all exceed the first threshold, only one manner needs to be selected, and the merging does not need to be performed on all the second aggregate tables. This simplifies a processing procedure, and improves processing efficiency.

When there are a plurality of aggregation rates that exceed the first threshold and that correspond to a same second aggregate table among the at least one estimated aggregation rate, the network device determines the first target aggregation rate from the plurality of aggregation rates in a plurality of manners, to determine the N to-be-merged aggregate tables. The following separately describes the manners.

In some optional implementations, when there are a plurality of aggregation rates that exceed the first threshold and that correspond to a same second aggregate table among the at least one estimated aggregation rate, the network device determines a highest aggregation rate among the plurality of aggregation rates as the first target aggregation rate, and then it is determined that the to-be-merged aggregate tables include an aggregate table corresponding to the first target aggregation rate.

For example, it is assumed that in the example shown in Table 4, the aggregation rate B, the aggregation rate D, and the aggregation rate F all exceed the first threshold, and all these aggregation rates correspond to the aggregate table 3. In this case, the network device determines a highest aggregation rate from the aggregation rate B, the aggregation rate D, and the aggregation rate F as the first target aggregation rate. Assuming that the aggregation rate F is the highest, the network device determines the aggregation rate F as the first target aggregation rate, and the aggregate table 3 and the aggregate table 4 are included in the N to-be-merged aggregate tables.

In this application, when there are a plurality of aggregation rates that exceed the first threshold and that correspond to a same second aggregate table among estimated aggregate tables, the highest aggregation rate among the plurality of aggregation rates is selected as the first target aggregation rate. It can be learned that, according to aggregation rate = (quantity of rows in the base table - quantity of rows in the aggregate table)/quantity of rows in the base table, a higher aggregation rate indicates less data in an aggregate table obtained through merging, to further reduce a storage amount and save storage resources.

In some optional implementations, when there are a plurality of aggregation rates that exceed the first threshold and that correspond to a same second aggregate table among the at least one estimated aggregation rate, the network device may determine an aggregation rate corresponding to a largest quantity of second aggregate tables among the plurality of aggregation rates as the first target aggregation rate, and then it is determined that the to-be-merged aggregate tables include an aggregate table corresponding to the first target aggregation rate.

For example, it is assumed that in the example shown in Table 4, the aggregation rate C, the aggregation rate F, and the aggregation rate I all exceed the first threshold, and all these aggregation rates correspond to the aggregate table 1. The aggregation rate C and the aggregation rate F each correspond to two aggregate tables, and the aggregation rate I corresponds to three aggregate tables. The aggregation rate I corresponds to a largest quantity of aggregate tables in these aggregation rates. Therefore, the network device determines the aggregation rate I as the first target aggregation rate, and the aggregate table 1, the aggregate table 3, and the aggregate table 4 corresponding to the aggregation rate I are a group of second aggregate tables and are included in the N to-be-merged aggregate tables.

In this application, when there are a plurality of aggregation rates that exceed the first threshold and that correspond to a same second aggregate table among estimated aggregate tables, the aggregation rate corresponding to the largest quantity of second aggregate tables among the plurality of aggregation rates is selected as the first target aggregation rate, that is, the largest quantity of second aggregate tables are merged, so that a merged aggregate table can include data of more dimensions as much as possible, to reduce a stored data amount, and save storage resources.

3. The N to-be-merged aggregate tables include aggregate tables with a same key and aggregate tables with different keys.

With reference to the foregoing descriptions, it can be learned that for a plurality of first aggregate tables with a same key, the network device may directly determine that the plurality of aggregate tables are included in the N to-be-merged aggregate tables. The network device may further estimate aggregation rates of merging the plurality of first aggregate tables with another aggregate table corresponding to a different key, to determine whether the plurality of first aggregate tables can be merged with the another aggregate table. There are a plurality of possible manners in which the network device estimates an aggregate table generated through merging. The following separately describes the manners.

In some optional implementations, the plurality of first aggregate tables with a same key may be first merged, to obtain a merged aggregate table. An aggregation rate of merging the merged aggregate table with another aggregate table with a different key is estimated, and the aggregation rate is compared with the first threshold, to determine whether these aggregate tables can be merged, and then it is determined whether these aggregate tables are included in the N to-be-merged aggregate tables.

For example, it is assumed that a key A corresponds to an aggregate table 1 to an aggregate table 3, a key B corresponds to an aggregate table 4, and a key C corresponds to an aggregate table 5. The network device merges the aggregate table 1 to the aggregate table 3 to obtain a merged aggregate table 6. Then, four aggregation rates generated by separately merging the aggregate table 4 and the aggregate table 6, the aggregate table 5 and the aggregate table 6, the aggregate table 4 and the aggregate table 5, the aggregate table 4, the aggregate table 4, and the aggregate table 6 are estimated. Then, based on the related descriptions in the foregoing "2. The N to-be-merged aggregate tables include aggregate tables with different keys", a first target aggregate table and a plurality of second aggregate tables corresponding to a first target aggregation rate are determined from the four aggregation rates. It should be noted that, if any aggregation rate corresponding to the aggregate table 6 among the four aggregation rates does not exceed the first threshold, the network device still determines that the N to-be-merged aggregate tables include the aggregate table 1 to the aggregate table 3 that are merged to obtain the aggregate table 6 and that correspond to a same key.

In some optional implementations, the network device may further directly estimate an aggregation rate generated by merging aggregate tables with different keys among obtained aggregate tables, and determine the N to-be-merged aggregate tables from the aggregation rate. For example, it is assumed that a key A corresponds to an aggregate table 1 to an aggregate table 3, a key B corresponds to an aggregate table 4, and a key C corresponds to an aggregate table 5. The network device may estimate an aggregation rate generated by merging any quantity of aggregate tables with different keys among the five aggregate tables. Then, based on the related descriptions in the foregoing "2. The N to-be-merged aggregate tables include aggregate tables with different keys", a first target aggregate table and a plurality of second aggregate tables corresponding to a first target aggregation rate are determined from the estimated aggregation rates.

In conclusion, the network device may directly determine that the plurality of first aggregate tables with a same key are included in the N to-be-merged aggregate tables. For the aggregate tables with different keys, the network device further needs to merge and estimate the plurality of aggregate tables with different keys, and compare an estimated aggregation rate with the first threshold, to determine whether the aggregate tables are included in the N to-be-merged aggregate tables.

303: The network device merges the N to-be-merged aggregate tables to obtain a merged aggregate table, where a data amount of the merged aggregate table is less than a sum of data amounts of the N to-be-merged aggregate tables.

After determining the N to-be-merged aggregate tables, the network device merges the N to-be-merged aggregate tables. Because there are a plurality of possible aggregate tables included in the N to-be-merged aggregate tables, specific operations of the network device are also different.

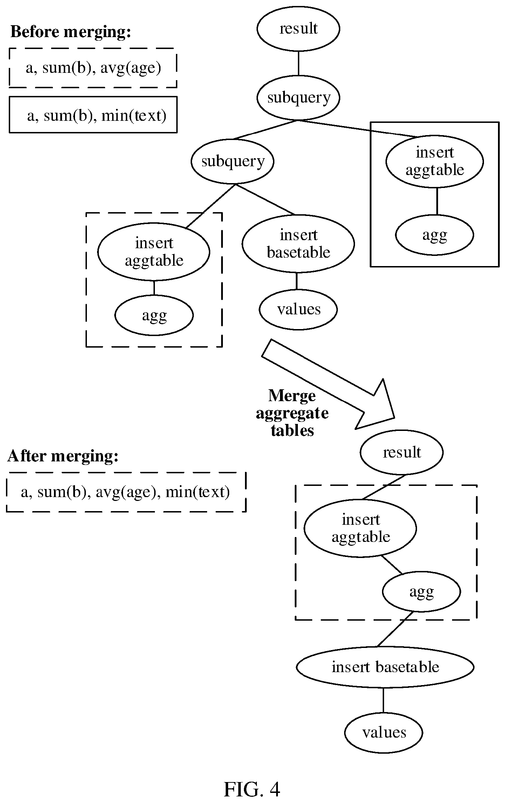

In some optional implementations, the N to-be-merged aggregate tables include a plurality of first aggregate tables with a same key, and the network device directly merges keys and values corresponding to the plurality of first aggregate tables. The following provides descriptions with reference to a diagram. FIG. 4 is a diagram according to an embodiment of this application.

First, a process of creating an aggregate table is briefly described. As shown in FIG. 4, a network device obtains a plurality of values (values), and establishes a base table (base table), or inserts the obtained values into the base table that has been established. The network device may further perform an aggregation (agg) operation, and aggregate data in the base table based on an aggregation definition, to obtain an aggregate table (agg table). Both the base table and aggregate table can respond to a query instruction of subquery (subquery) and output a query result (result).

In the embodiment shown in FIG. 4, it is assumed that two aggregate tables (agg table) are created on the base table (table), where an aggregation definition of an aggregate table 1 is "key-value pair: a--sum(b), min(text)" and an aggregation definition of an aggregate table 2 is "key-value pair: a--sum(b), avg(age)".

Aggregation definitions of the two aggregate tables include a same key: a, and a same value: sum(b). In this case, the network device directly merges the aggregate table 1 and the aggregate table 2. That is, the same key a and the same value sum(b) are deduplicated, and an obtained aggregation definition of a merged aggregate table is "key-value pair: a--sum(b), min(text), avg(age)".

It can be learned, from comparison between two sides of an arrow in FIG. 4, that, after the merging, the aggregation operation sum(b) needs to perform aggregation calculation only once, which is different from that calculation needs to be performed twice before the merging. In addition, only one copy of the aggregation key a and the aggregation value sum(b) needs to be stored, while two copies need to be stored before the merging. This saves compute resources and reduces storage resources.

In the embodiment shown in FIG. 4, an example of different aggregate tables with a same key and a same value is used. In this solution, the same value is deduplicated during the merging. In actual application, different aggregate tables with a same key may correspond to different values. In this case, a deduplication operation does not need to be performed. For example, it is assumed that an aggregation definition of an aggregate table 1 is "key-value pair: a--sum(b)" and an aggregation definition of an aggregate table 2 is "key-value pair: a-avg(age)". The network device merges the aggregate table 1 and the aggregate table 2 to obtain an aggregation definition of a merged aggregate table as "key-value pair: a--sum(b), avg(age)".

In addition, in the embodiment shown in FIG. 4, an example of a group of first aggregate tables with a same key is used. In actual application, there may be more groups of first aggregate tables, and the network device separately merges the groups. For example, keys included in aggregation definitions of an aggregate table 1 to an aggregate table 3 are all key A, keys included in aggregation definitions of an aggregate table 4 to an aggregate table 7 are all key B, and keys included in aggregation definitions of an aggregate table 8 to an aggregate table 10 are all key C. In this case, the network device separately merges the aggregate table 1 to the aggregate table 3, the aggregate table 4 to the aggregate table 7, and the aggregate table 8 to the aggregate table 10, and obtains three merged aggregate tables.

In addition, in the embodiment shown in FIG. 4, an example in which different aggregate tables have only one key is used. In actual application, the aggregate tables may further include more keys. This is not specifically limited herein. For example, it is assumed that keys included in aggregation definitions of an aggregate table 1 to an aggregate table 3 are all key A and key B. In this case, keys in an aggregation definition of a merged aggregate table that are obtained by merging the aggregate table 1 and the aggregate table 2 are still a key A and a key B.

In this application, for the plurality of first aggregate tables with the same key in M aggregate tables, the plurality of first aggregate tables may be directly determined as the to-be-merged aggregate tables. This operation is simple and convenient, and improves practicability of the technical solution of this application. In addition, merging aggregate tables with the same key involves deduplication. This reduces a quantity of stored copies of the same key, further reduces a waste of storage resources, and lowers usage costs of a user.

In some optional implementations, N to-be-merged aggregate tables include at least one group of second aggregate tables, and each group of second aggregate tables includes a plurality of second aggregate tables with different keys. In this solution, that the N to-be-merged aggregate tables are merged includes that keys and values that correspond to each of the at least one group of second aggregate tables are separately merged. It may be understood that a merged aggregate table may be obtained by merging a group of second aggregate tables.

For example, it is assumed that the N to-be-merged aggregate tables include two groups of second aggregate tables: a first group of second aggregate tables including an aggregate table 1 and an aggregate table 2, and a second group of second aggregate tables including an aggregate table 3 to an aggregate table 5. The network device merges the aggregate table 1 and the aggregate table 2 to obtain a merged aggregate table, and merges the aggregate table 3 to the aggregate table 5 to obtain another merged aggregate table.

For example, it is assumed that the network device determines that two aggregate tables with different keys need to be merged. An aggregation definition of the aggregate table 1 is "key-value pair: a--sum(b), min(text)" and an aggregation definition of the aggregate table 2 is "key-value pair: c--sum(b), avg(age)". The two aggregation definitions include a same value: sum(b). The network device deduplicates the value, and an obtained aggregation definition of the merged aggregate table is "key-value pair: a, c--sum(b), min(text), avg(age)".

For example, for different aggregate tables with different keys and different values, the network device may also merge the different aggregate tables provided that the network device determines, in step 302, that the different aggregate tables are included in the N to-be-merged aggregate tables.

In this application, an estimated aggregation rat generated by merging different aggregate tables with different keys is compared with a first threshold, to determine whether the aggregate tables with different keys can be merged, thereby balancing computational power resources and usage costs. In a solution in which merging can be performed, if there is a same value in the aggregate tables with different keys, deduplication is performed during the merging, to further reduce occupation of storage resources and save storage resources. In conclusion, after obtaining M aggregate tables corresponding to a same base table, the network device determines, based on the aggregation definition of the aggregate table, the N to-be-merged aggregate tables from the M aggregate tables, and merges the N aggregate tables to obtain a merged aggregate table. A data amount of the merged aggregate table is less than a sum of data amounts of the N to-be-merged aggregate tables. In other words, the data processing method provided in this application reduces a quantity of times that same data is stored in different aggregate tables, thereby reducing a data amount of the aggregate table and reducing occupation of storage resources.

In some optional implementations, after merging the N to-be-merged aggregate tables, the network device may further determine whether to change a data distribution manner. In general, the network device may obtain respective aggregation rates of all aggregate tables corresponding to a current moment, determine, from the respective aggregation rates of all the aggregate tables, a second target aggregation rate that exceeds a second threshold, and broadcast data included in an aggregate table corresponding to the second target aggregation rate.

There are a plurality of possible cases for all the aggregate tables corresponding to the current moment. The aggregate tables may include an original aggregate table that is not merged and a merged aggregate table, or include a merged aggregate table, or include an original aggregate table that is not merged. The following describes these possible cases separately by using an example described above, where M is 5; in other words, the network device obtains five original aggregate tables: an aggregate table 1 to an aggregate table 5.

For example, in a data processing process, if the network device merges the aggregate table 1 to the aggregate table 3 to obtain a merged aggregate table 6, and merges the aggregate table 4 and the aggregate table 5 to obtain a merged aggregate table 7, the network device obtains two aggregate tables through the merging: the aggregate table 6 and the aggregate table 7.

For example, in a data processing process, if the network device merges the aggregate table 1 and the aggregate table 2 to obtain a merged aggregate table 8, and determines that the aggregate table 3 to the aggregate table 5 cannot be merged, the network device finally obtains four aggregate tables: an aggregate table 8, the aggregate table 3, the aggregate table 4, and the aggregate table 5.

For example, in a data processing process, if the network device determines that none of the aggregate tables can be merged, the network device finally obtains five aggregate tables, that is, the aggregate table 1 to the aggregate table 5.

That the network device broadcasts the data included in the aggregate table corresponding to the second target aggregation rate is specifically to distribute the data of the aggregate tables in a replica (replica) form. If data in an original aggregate table follows a hash (hash) distribution or a Rosin-Rammler distribution (Rosin-Rammler distribution, RR distribution), this application changes the data distribution form of the aggregate table.

In general, to broadcast data, a broadcast (broadcast) operator may be added after the aggregation (agg) operation, and the data of the aggregate table is distributed to each node of a system, so that each node has full data. If the network device functions as a CN in the system, the network device broadcasts the data of the aggregate table to all DNs that communicate with the CN. If the network device functions as a DN in the system, the network device broadcasts the data of the aggregate table to all DNs that correspond to a same CN as the DN, and also to the CN corresponding to the DN.

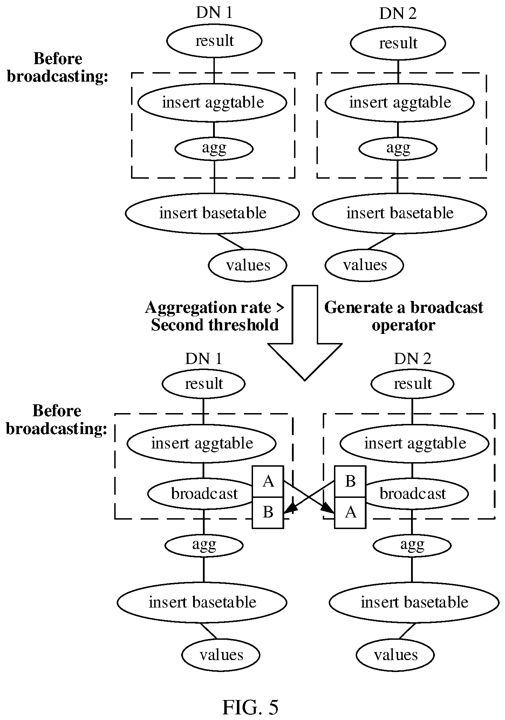

The following describes replica distribution with reference to a diagram. FIG. 5 is a diagram according to an embodiment of this application.

In the embodiment shown in FIG. 5, if aggregation rates of aggregate tables stored on a DN 1 and a DN 2 both exceed a second threshold, data in an aggregate table stored on each DN is broadcast. In a scenario of "after broadcasting" in FIG. 5, the DN 1 and the DN 2 execute a broadcast (broadcast) operator after an aggregation operation. For the DN 1, the DN 1 broadcasts data A stored on the DN 1 to the DN 2, and the data A is data in the aggregate table whose aggregation rate exceeds the second threshold and that is stored on the DN 1. For the DN 1, the DN 1 broadcasts data B stored on the DN 1 to the DN 1, and the data B is data in the aggregate table whose aggregation rate exceeds the second threshold and that is stored on the DN 2.

It is assumed that in a scenario "before broadcasting" shown in FIG. 5, aggregate tables included on the DN 1 and the DN 2 are respectively shown in Table 5 and Table 6.

**Table 5**

| Key: a | Value: sum_b |
|---|---|
| 1 | 30 |
| 10 | 30 |
| 30 | 100 |

**Table 6**

| Key: a | Value: sum_b |
|---|---|
| 20 | 90 |
| 40 | 200 |

If data broadcast is not performed, each DN has only some data sets. When a select (select) statement is executed, all DNs are scanned and then summarization is performed on a CN. If data broadcast is performed, data of (30, 100) newly generated on the DN 1 is broadcast to the DN 2, and data of (40, 200) newly generated on the DN 2 is broadcast to the DN 1. After the broadcast, both the DN 1 and the DN 2 have full data.

After the broadcast, aggregate tables included on the DN 1 and the DN 2 are both shown in Table 7.

**Table 7**

| Key: a | Value: sum_b |
|---|---|
| 1 | 30 |
| 10 | 30 |
| 20 | 90 |
| 30 | 100 |
| 40 | 200 |

After the broadcast, each node in the system stores full data of an aggregate table. During data query, any node can be selected for data query. Optionally, a node with small load may be selected for data query, or the CN may specify a node with small load to complete data query. The load herein may be understood as an idle resource of the node, and may be determined by using a central processing unit (central processing unit, CPU) resource, a memory resource, a quantity of tasks, or the like of the node. For example, if a CPU has more idle resources, more idle memory resources, or fewer tasks, it is considered that the load of the node is smaller.

In addition, it should be noted that a value of the second threshold may be set based on an actual application requirement. This is not limited herein. Optionally, the second threshold may be greater than, less than, or equal to a first threshold. This is not specifically limited herein.

In this application, data in the aggregate table whose aggregation rate exceeds the second threshold may be broadcast, so that during data query, a user can perform query on any node, and data transmission between nodes is not required, thereby reducing usage of network resources, and improving reliability and convenience of the technical solution. In addition, if query is directly performed on a node with small load, data query efficiency can be improved.

In some optional implementations, a network device may parallelly perform aggregation calculation on all aggregate tables corresponding to a base table. Specifically, an execution plan at an aggregation layer may be changed to multithreaded parallel execution, to implement parallel execution of aggregation calculation for the plurality of aggregate tables when the base table corresponds to the plurality of aggregate tables.

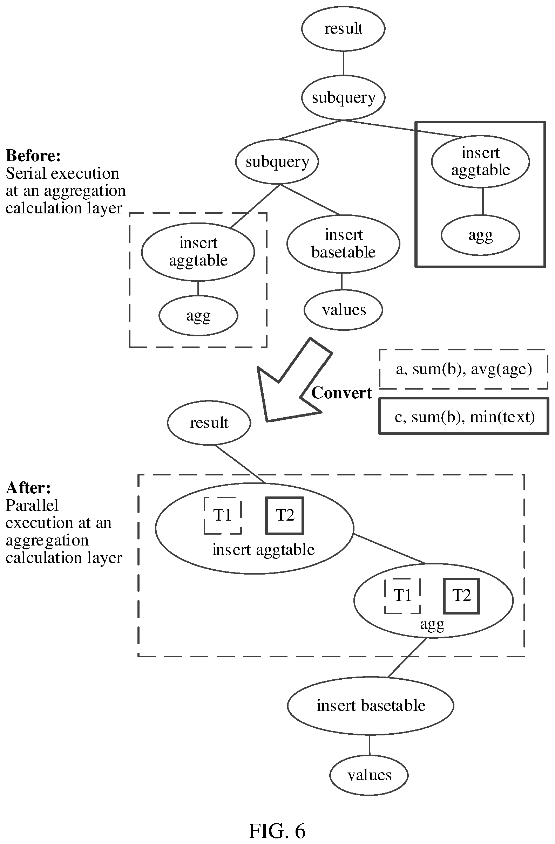

The following further provides descriptions with reference to a diagram shown in FIG. 6, which is a diagram according to an embodiment of this application.

As shown in FIG. 6, it is assumed that the base table corresponds to two aggregate tables. An aggregation definition of an aggregate table 1 is "key-value pair: c--sum(b), min(text)"; and an aggregation definition of an aggregate table 2 is "key-value pair: a--sum(b), avg(age)".

Under traditional methods, as shown in the "Before" portion in FIG. 6, aggregation calculations for the two aggregate tables are executed in serial, meaning that aggregation calculation for the aggregate table 2 can start only after aggregation calculation for the aggregate table 1 is completed. This leads to slower aggregation calculation for aggregate tables. If there are a large quantity of aggregate tables, a performance bottleneck is caused due to slow aggregation calculation.

In this embodiment of this application, a parallel manner, shown in the "After" portion in FIG. 6, is used, a quantity of parallel execution is set, and parallel calculation is performed on a plurality of aggregate tables at an aggregation calculation layer. For example, parallel processing is implemented by using a thread pool or in a multithreading manner.

In this application, aggregation calculation is performed parallelly to reduce impact on a data import procedure, thereby reducing a data processing delay.

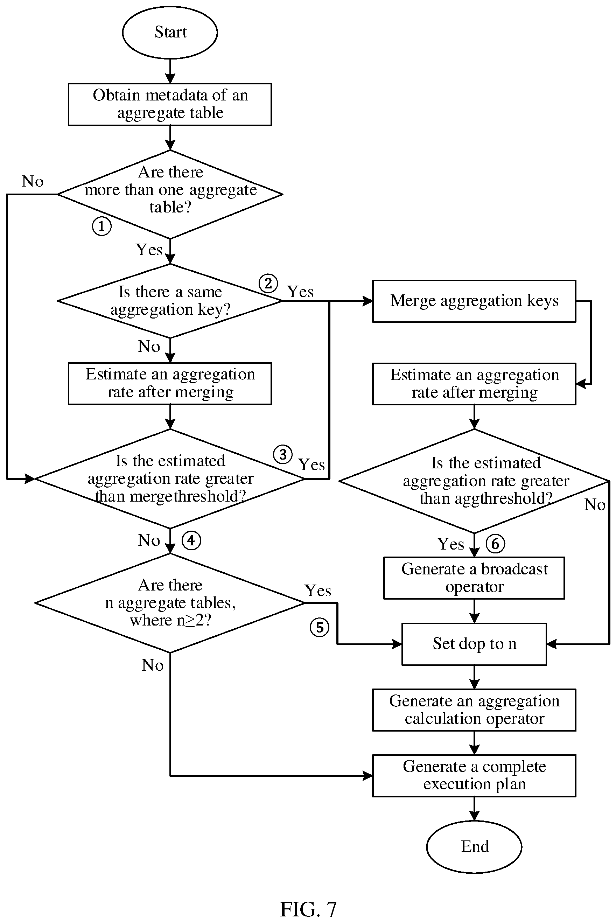

In conclusion, the data processing method described above may be summarized as a procedure shown in FIG. 7, which is a schematic flowchart of a data processing method according to an embodiment of this application.

As shown in FIG. 7, the data processing method includes the following steps.

A network device obtains metadata of an aggregate table. The metadata may indicate whether the obtained table is an aggregate table. The network device performs step ①: Determines whether there are more than one "aggregate table" in a base table to which data is imported. If there is no aggregate table or there is only one aggregate table, an execution plan is generated normally.

②: If there are a plurality of "aggregate tables", determines whether there is a same aggregation key in the aggregate tables when merging the plurality of "aggregate tables". If there is a same aggregation key in the aggregate tables, merging is performed, and an aggregation calculation operator is generated based on a key and a value of the new merged "aggregate table". The aggregation calculation operator indicates a manner of merging the aggregate tables.

③: If there is no same aggregation key, an aggregation rate is evaluated after merging. If the aggregation rate exceeds a specified merging threshold (merge_threshold), the merging can be performed. Two "aggregate tables" are merged, and then an aggregation calculation operator is generated based on a key and a value of the new merged "aggregate table".

④: If the evaluated aggregation rate is less than the specified merging threshold, the merging cannot be performed and an execution plan procedure is generated normally. The merging threshold is the first threshold described above.

⑤: If there are a plurality of aggregations, a quantity of aggregate tables is obtained and a degree of parallelism of the corresponding quantity is set (dop is set to n). When the operator is executed, a plurality of threads are started for parallel execution. n is an integer greater than or equal to 2, and indicates that there are n threads/processes.

⑥: Before the aggregation calculation operator is generated, the aggregation rate is first evaluated. If the aggregation rate is higher than a specified aggregation threshold (agg_threshold), a broadcast operator is additionally generated to broadcast data to another compute node. In other words, data distribution is determined as replica distribution. The merging threshold is the second threshold described above.

Related steps in the embodiment shown in FIG. 7 are described in detail in the foregoing embodiments shown in FIG. 3 to FIG. 5. Refer to the foregoing descriptions. Details are not described herein again.

The following describes related devices provided in embodiments of this application.

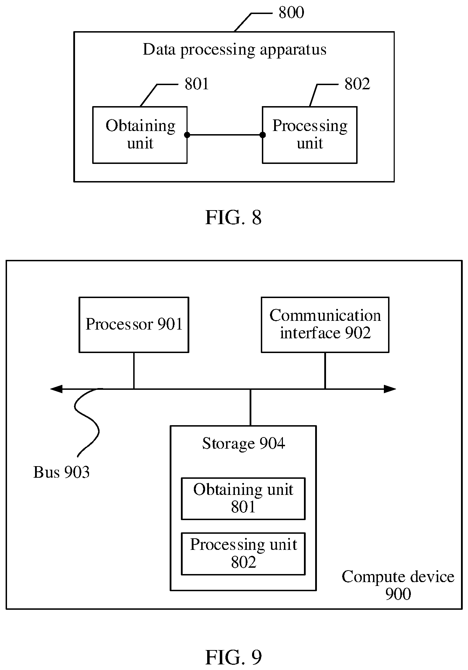

FIG. 8 is a diagram of a structure of a data processing apparatus according to an embodiment of this application. As shown in FIG. 8, the data processing apparatus 800 includes an obtaining unit 801 and a processing unit 802.

In some optional implementations, the obtaining unit 801 is configured to obtain a base table and M aggregate tables, where the base table includes data actually stored by the data processing apparatus, the M aggregate tables are obtained by processing, based on M aggregation definitions, the data included in the base table, the M aggregate tables are in one-to-one correspondence with the M aggregation definitions, the M aggregation definitions are different, the aggregation definition includes a key-value pair, the aggregation definition indicates a manner of processing the data included in the base table, and M is an integer greater than or equal to 2.

The processing unit 802 is configured to determine N to-be-merged aggregate tables from the M aggregate tables based on keys included in the M aggregation definitions, where N is an integer greater than or equal to 2 and less than or equal to M; and merge the N to-be-merged aggregate tables to obtain a merged aggregate table, where a data amount of the merged aggregate table is less than a sum of data amounts of the N to-be-merged aggregate tables.

In some optional implementations, the processing unit 802 is specifically configured to: if there are a plurality of first aggregation definitions including a same key among the M aggregation definitions, determine, by the data processing apparatus from the M aggregate tables, that the N to-be-merged aggregate tables include a plurality of first aggregate tables corresponding to the plurality of first aggregation definitions; and that the data processing apparatus merges the N to-be-merged aggregate tables includes: merging keys and values corresponding to the plurality of first aggregate tables.

In some optional implementations, the processing unit 802 is specifically configured to: if there are X second aggregation definitions including different keys among the M aggregation definitions, estimate, by the data processing apparatus, at least one aggregation rate generated by merging any two to X second aggregate tables corresponding to the X second aggregation definitions, where X is an integer greater than or equal to 2 and less than or equal to M; and
determine, by the data processing apparatus, that the N to-be-merged aggregate tables include at least one group of second aggregate tables corresponding to at least one first target aggregation rate.

The first target aggregation rate is an aggregation rate that is among the at least one aggregation rate and that exceeds a first threshold, each of the at least one group of second aggregate tables includes a plurality of second aggregate tables, and the plurality of second aggregate tables included in each group of second aggregate tables are different from another aggregate table in the X second aggregate tables.

In some optional implementations, the processing unit 802 is specifically configured to: if there are a plurality of aggregation rates that exceed the first threshold and that correspond to a same second aggregate table among the at least one aggregation rate, determine a highest one of the plurality of aggregation rates as the first target aggregation rate; or if there are a plurality of aggregation rates that exceed the first threshold and that correspond to a same second aggregate table among the at least one aggregation rate, determine an aggregation rate corresponding to a largest quantity of second aggregate tables among the plurality of aggregation rates as the first target aggregation rate.

In some optional implementations, the processing unit 802 is specifically configured to separately merge keys and values that correspond to each of the at least one group of second aggregate tables.

In some optional implementations, the obtaining unit 801 is further configured to obtain respective aggregation rates of all aggregate tables corresponding to the base table.

The processing unit 802 is further configured to determine, from the respective aggregation rates of all the aggregate tables, a second target aggregation rate that exceeds a second threshold; and broadcast data included in an aggregate table corresponding to the second target aggregation rate.

In some optional implementations, the processing unit 802 is further configured to parallelly perform aggregation calculation on all the aggregate tables corresponding to the base table.

Both the obtaining unit 801 and the processing unit 802 may be implemented by using software, or may be implemented by using hardware. For example, the following uses the processing unit 802 as an example to describe an implementation of the processing unit 802. Similarly, for an implementation of the obtaining unit 801, refer to the implementation of the processing unit 802.

As an example of a software functional unit, the processing unit 802 may include code running on a computing instance. The computing instance may include at least one of a physical host (compute device), a virtual machine, and a container. Further, there may be one or more computing instances. For example, the processing unit 802 may include code running on a plurality of hosts/virtual machines/containers. It should be noted that, the plurality of hosts/virtual machines/containers configured to run the code may be distributed in a same region, or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

As an example of a hardware functional unit, the processing unit 802 may include at least one compute device, for example, a server. Alternatively, the processing unit 802 may be implemented via an application-specific integrated circuit (application-specific integrated circuit, ASIC), a device implemented via a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the processing unit 802 may be distributed in a same region, or may be distributed in different regions. The plurality of compute devices included in the processing unit 802 may be distributed in a same AZ, or may be distributed in different AZs. Similarly, the plurality of compute devices included in the processing unit 802 may be distributed in a same VPC, or may be distributed in a plurality of VPCs. The plurality of compute devices may be any combination of compute devices such as a server, an ASIC, a PLD, a CPLD, an FPGA, and GAL.

It should be noted that the obtaining unit 801 and the processing unit 802 separately implement different steps in the data processing method, to implement all functions of the data processing apparatus 800. The data processing apparatus 800 is configured to perform the operations performed by the network device in the embodiments shown in FIG. 2 to FIG. 7, to implement the data processing method provided in embodiments of this application. Details are not described herein again.

FIG. 9 is a diagram of a structure of a compute device according to an embodiment of this application. The compute device 900 includes a processor 901, a communication interface 902, a bus 903, and a storage 904. The processor 901, the communication interface 902, and the storage 904 communicate with each other through the bus 903. In actual application, communication may also be implemented by using another means such as wireless transmission. This is not specifically limited herein.

The compute device 900 may be a server or a terminal device. It should be understood that a quantity of processors and a quantity of storages in the compute device 900 are not limited in this application.

The processor 901 may include any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 902 uses a transceiver module, for example, but not limited to, a network interface card or a transceiver, to implement communication between the compute device 900 and another device or a communication network.

The bus 903 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 9, but this does not mean that there is only one bus or only one type of bus. The bus 903 may include a path for information transmission between components (for example, the storage 904, the processor 901, and the communication interface 902) of the compute device 900.

The storage 904 may include a volatile memory (volatile memory), for example, a random access memory (random access memory, RAM). The storage 904 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 904 stores executable program code, and the processor 901 executes the executable program code to separately implement functions of the obtaining unit 801 and the processing unit 802, to implement the data processing method. In other words, the storage 904 stores instructions used for performing the data processing method.

Alternatively, the storage 904 stores executable code, and the processor 901 executes the executable code to separately implement functions of the obtaining unit 801 and the processing unit 802, to implement the data processing method. In other words, the storage 904 stores instructions used for performing the data processing method.

An embodiment of this application further provides a compute device cluster. The compute device cluster includes at least one compute device. The compute device may be a server, for example, a central server, an edge server, or a local server in a local data center. In some optional implementations, the compute device may alternatively be a terminal device, for example, a desktop computer, a notebook computer, or a smartphone.

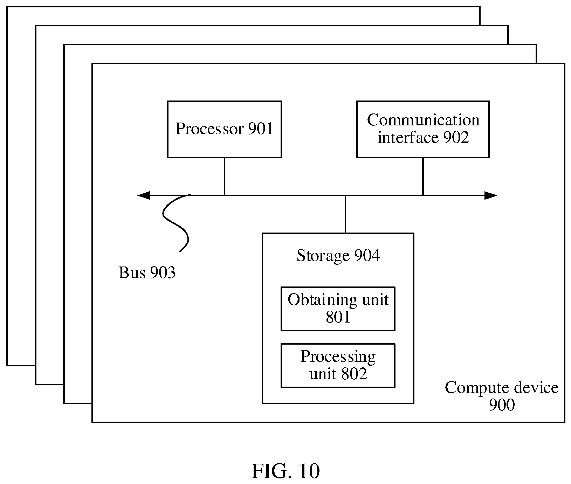

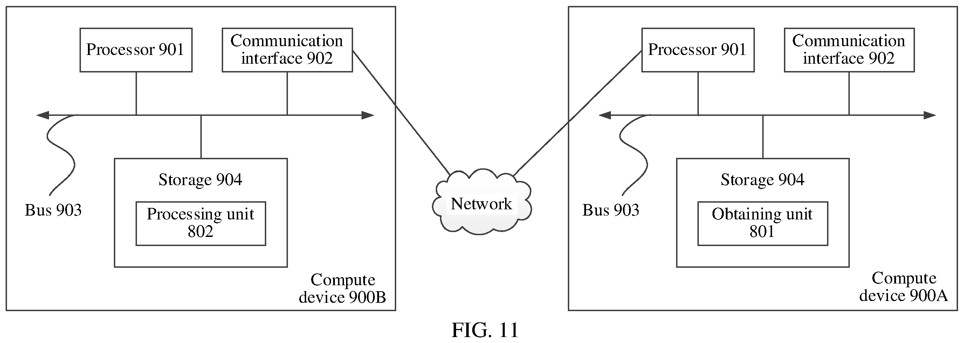

FIG. 10 and FIG. 11 are diagrams of structures of a compute device cluster according to an embodiment of this application.

As shown in FIG. 10, the compute device cluster includes at least one compute device 900. A storage 904 in one or more compute devices 900 in the compute device cluster may store same instructions used for performing the data processing method provided in embodiments of this application.

Alternatively, in some possible implementations, the storage 904 in the one or more compute devices 900 in the compute device cluster may respectively store some instructions used for performing the data processing method. In other words, a combination of the one or more compute devices 904 may jointly execute the instructions used for performing the data processing method.

It should be noted that storages 904 in different compute devices 900 in the compute device cluster may store different instructions respectively used for performing some functions of data processing apparatus. In other words, the instructions stored in the storages 904 in different compute devices 900 each may implement a function of one or more of the obtaining unit 801 and the processing unit 802.

In some possible implementations, the one or more compute devices in the compute device cluster may be connected through a network. The network may be a wide area network, a local area network, or the like. FIG. 11 shows a possible implementation. As shown in FIG. 11, a compute device 900A is connected to a compute device 900B through a network. Specifically, each compute device is connected to the network through a communication interface in the compute device. In this possible implementation, a storage 904 in the compute device 900A stores instructions used for performing a function of the obtaining unit 801. In addition, a storage 904 in the compute device 900B stores instructions for performing a function of the processing unit 802.

A connection manner between the compute device clusters shown in FIG. 11 may be considered based on the data processing method provided in this application, that is, a processing operation and an operation other than the processing operation are separately performed. In other words, it is considered that the function of the obtaining unit 801 is performed by the compute device 900A, and the function of the processing unit 802 is performed by the compute device 900B.

It should be understood that a function of the compute device 900A shown in FIG. 11 may alternatively be completed by a plurality of compute devices 900. Similarly, a function of the compute device 900B may alternatively be completed by a plurality of compute devices 900.

An embodiment of this application further provides another compute device cluster. For a connection relationship between compute devices in the compute device cluster, refer to the connection manners of the compute device cluster in FIG. 10 and FIG. 11 similarly. Details are not described herein again.

An embodiment of this application further provides a computer program product including instructions. The computer program product may be software or a program product that includes instructions and that can run on a compute device or can be stored in any usable medium. When the computer program product runs on at least one computer device, the at least one computer device is enabled to perform the foregoing data processing method.

An embodiment of this application further provide a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a compute device to perform the foregoing data processing method.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, and such modifications or replacements do not make the essence of the corresponding technical solutions depart from the protection scope of the technical solutions of embodiments of this application.

## Claims

1. A data processing method, comprising:
obtaining, by a network device, a base table and M aggregate tables, wherein the base table comprises data actually stored by the network device, the M aggregate tables are obtained by processing, based on M aggregation definitions, the data comprised in the base table, the M aggregate tables are in one-to-one correspondence with the M aggregation definitions, the M aggregation definitions are different, the aggregation definition comprises a key-value pair, the aggregation definition indicates a manner of processing the data comprised in the base table, and M is an integer greater than or equal to 2;
determining, by the network device, N to-be-merged aggregate tables from the M aggregate tables based on keys comprised in the M aggregation definitions, wherein N is an integer greater than or equal to 2 and less than or equal to M; and
merging, by the network device, the N to-be-merged aggregate tables to obtain a merged aggregate table, wherein a data amount of the merged aggregate table is less than a sum of data amounts of the N to-be-merged aggregate tables.

2. The method according to claim 1, wherein the determining, by the network device, the N to-be-merged aggregate tables from the M aggregate tables based on the keys comprised in the M aggregation definitions comprises:
if there are a plurality of first aggregation definitions comprising a same key in the M aggregation definitions, determining, by the network device from the M aggregate tables, that the N to-be-merged aggregate tables comprise a plurality of first aggregate tables corresponding to the plurality of first aggregation definitions; and
the merging, by the network device, the N to-be-merged aggregate tables comprises: merging keys and values corresponding to the plurality of first aggregate tables.

3. The method according to claim 1 or 2, wherein the determining, by the network device, the N to-be-merged aggregate tables from the M aggregate tables based on the keys comprised in the M aggregation definitions comprises:
if there are X second aggregation definitions comprising different keys in the M aggregation definitions, estimating, by the network device, at least one aggregation rate generated by merging any two to X second aggregate tables corresponding to the X second aggregation definitions, wherein X is an integer greater than or equal to 2 and less than or equal to M; and
determining, by the network device, that the N to-be-merged aggregate tables comprise at least one group of second aggregate tables corresponding to at least one first target aggregation rate, wherein
the first target aggregation rate is an aggregation rate that is among the at least one aggregation rate and that exceeds a first threshold, each of the at least one group of second aggregate tables comprises a plurality of second aggregate tables, and the plurality of second aggregate tables comprised in each group of second aggregate tables are different from another aggregate table in the X second aggregate tables.

4. The method according to claim 3, wherein if there are a plurality of aggregation rates that exceed the first threshold and that correspond to a same second aggregate table among the at least one aggregation rate, the network device determines a highest one of the plurality of aggregation rates as the first target aggregation rate; or
if there are a plurality of aggregation rates that exceed the first threshold and that correspond to a same second aggregate table among the at least one aggregation rate, the network device determines an aggregation rate corresponding to a largest quantity of second aggregate tables among the plurality of aggregation rates as the first target aggregation rate.

5. The method according to claim 3 or 4, wherein the merging the N to-be-merged aggregate tables comprises:
separately merging, by the network device, keys and values that correspond to each of the at least one group of second aggregate tables.

6. The method according to any one of claims 1 to 5, wherein after the merging the N to-be-merged aggregate tables, the method further comprises:
obtaining, by the network device, respective aggregation rates of all aggregate tables corresponding to the base table;
determining, by the network device from the respective aggregation rates of all the aggregate tables, a second target aggregation rate that exceeds a second threshold; and
broadcasting, by the network device, data comprised in an aggregate table corresponding to the second target aggregation rate.

7. A data processing apparatus, comprising:
an obtaining unit, configured to obtain a base table and M aggregate tables, wherein the base table comprises data actually stored by the data processing apparatus, the M aggregate tables are obtained by processing, based on M aggregation definitions, the data comprised in the base table, the M aggregate tables are in one-to-one correspondence with the M aggregation definitions, the M aggregation definitions are different, the aggregation definition comprises a key-value pair, the aggregation definition indicates a manner of processing the data comprised in the base table, and M is an integer greater than or equal to 2; and
a processing unit, configured to determine N to-be-merged aggregate tables from the M aggregate tables based on keys comprised in the M aggregation definitions, wherein N is an integer greater than or equal to 2 and less than or equal to M, wherein
the processing unit is further configured to merge the N to-be-merged aggregate tables to obtain a merged aggregate table, wherein a data amount of the merged aggregate table is less than a sum of data amounts of the N to-be-merged aggregate tables.

8. The data processing apparatus according to claim 7, wherein the processing unit is specifically configured to:
if there are a plurality of first aggregation definitions comprising a same key in the M aggregation definitions, determine, by the data processing apparatus from the M aggregate tables, that the N to-be-merged aggregate tables comprise a plurality of first aggregate tables corresponding to the plurality of first aggregation definitions; and
that the data processing apparatus merges the N to-be-merged aggregate tables comprises: merging keys and values corresponding to the plurality of first aggregate tables.

9. The data processing apparatus according to claim 7 or 8, wherein the processing unit is specifically configured to:
if there are X second aggregation definitions comprising different keys in the M aggregation definitions, estimate, by the data processing apparatus, at least one aggregation rate generated by merging any two to X second aggregate tables corresponding to the X second aggregation definitions, wherein X is an integer greater than or equal to 2 and less than or equal to M; and
determine, by the data processing apparatus, that the N to-be-merged aggregate tables comprise at least one group of second aggregate tables corresponding to at least one first target aggregation rate, wherein
the first target aggregation rate is an aggregation rate that is among the at least one aggregation rate and that exceeds a first threshold, each of the at least one group of second aggregate tables comprises a plurality of second aggregate tables, and the plurality of second aggregate tables comprised in each group of second aggregate tables are different from another aggregate table in the X second aggregate tables.

10. The data processing apparatus according to claim 9, wherein the processing unit is specifically configured to:
if there are a plurality of aggregation rates that exceed the first threshold and that correspond to a same second aggregate table among the at least one aggregation rate, determine a highest one of the plurality of aggregation rates as the first target aggregation rate; or
if there are a plurality of aggregation rates that exceed the first threshold and that correspond to a same second aggregate table among the at least one aggregation rate, determine an aggregation rate corresponding to a largest quantity of second aggregate tables among the plurality of aggregation rates as the first target aggregation rate.

11. The data processing apparatus according to claim 9 or 10, wherein the processing unit is specifically configured to:
separately merge keys and values that correspond to each of the at least one group of second aggregate tables.

12. The data processing apparatus according to any one of claims 7 to 11, wherein the obtaining unit is further configured to obtain respective aggregation rates of all aggregate tables corresponding to the base table; and
the processing unit is further configured to:
determine, from the respective aggregation rates of all the aggregate tables, a second target aggregation rate that exceeds a second threshold; and
broadcast data comprised in an aggregate table corresponding to the second target aggregation rate.

13. A compute device cluster, comprising at least one compute device, wherein each compute device comprises a processor and a storage; and
the processor of the at least one compute device is configured to execute instructions stored in the storage of the at least one compute device, to cause the compute device cluster to perform the method according to any one of claims 1 to 6.

14. A computer program product comprising instructions, wherein when the instructions are run by a compute device cluster, the compute device cluster is caused to perform the method according to any one of claims 1 to 6.

15. A computer-readable storage medium, wherein the computer-readable storage medium comprises computer program instructions, and when the computer program instructions are run by a compute device cluster, the compute device cluster is caused to perform the method according to any one of claims 1 to 6.
